# EUROPÄISCHE PATENTSCHRIFT

(11) **EP 0 674 965 B1**
(45) Veröffentlichungstag und Bekanntmachung des Hinweises auf die Patenterteilung: **21.10.1998**
(21) Anmeldenummer: 94104848.0
(22) Anmeldetag: 28.03.1994
(51) Int. Cl.: B23K 26/02

(54) **Verfahren zur Überwachung der Einschweisstiefe in Werkstücken beim Laserstrahlschweissen**
Process for monitoring the welding depth in workpieces during laser beam welding
Procédé de surveillance de la profondeur de soudage dans les pièces étant soudées au faisceau laser

(43) Veröffentlichungstag der Anmeldung: 04.10.1995
(73) Patentinhaber: INPRO INNOVATIONSGESELLSCHAFT FÜR FORTGESCHRITTENE PRODUKTIONSSYSTEME IN DER FAHRZEUGINDUSTRIE MBH, 10787 Berlin (DE)
(72) Erfinder: Bethke, Ulrich, Dr., D-10787 Berlin (DE); Wahl, Roland, Dr., D-10787 Berlin (DE)
(74) Vertreter: Hoffmann, Klaus-Dieter, Dipl.-Ing.

(56) Entgegenhaltungen:
- WO-A-92/14578
- WO-A-93/03881
- US-A- 4 817 020
- LASER UND OPTOELEKTRONIK., Bd.21, Nr.3, Juni 1989, STUTTGART DE Seiten 69 - 72, XP49079 M. ALAVI ET AL. 'Lichtemission während des Laserschweissprozesses'
- PATENT ABSTRACTS OF JAPAN vol. 9, no. 84 (M-371) (1807) 13. April 1985 & JP-A-59 212 184 (HITACHI SEISAKUSHO K.K.) 1. Dezember 1984

## Beschreibung

Die Erfindung betrifft ein Verfahren zum Überwachen des Laserschweißprozesses an Werkstücken, bei dem während des Schweißvorgangs die vom Werkstück reflektierte Laserstrahlung und deren Anteil erfaßt werden, der bei beginnender Ausbildung einer Aufschmelzung gleichzeitig mit der sich erhöhenden Laserstrahlabsorption entsprechend sinkt.

Im Zusammenhang mit der Materialbearbeitung mittels Laser ist ein Dampfkanalmodell angenommen worden,nach dem während des Schweißprozesses in der Mitte der Bearbeitungszone eine Dampfkapillare ausgebildet wird,die durch Mehrfachreflexion eine Erhöhung der Absorption bewirkt.Hierauf aufbauend wurden Untersuchungen hinsichtlich des Zusammenhangs zwischen den optischen Meßgrößen und den Laserstrahlparametern bzw. den Schweißpunkteigenschaften vorgenommen ("Laser und Optoelektronik", Band 21, Nr. 3, Juni 1989, Stuttgart DE,Seiten 69-72,XP49079). Unter Einsatz eines gepulsten Nd:YAG-Lasers und Proben aus Edelstahl wurde die zeitliche Entwicklung der eingestrahlten Laserintensität und der vom Metall reflektierten Strahlung registriert. Es zeigte sich, daß bei niedrigen Leistungsdichten der Anteil der reflektierten (nicht absorbierten) Strahlung während der Energieübertragung unverändert blieb und keine Veränderungen der Metalloberfläche durch die Lasereinwirkung auftraten. Bei höheren Leistungsdichten wurde eine deutliche Abnahme der reflektierten Strahlungsintensität beobachtet, und die Lasereinstrahlung führte in diesem Leistungsbereich zur Bildung einer Schmelzzone um die Auftreffstelle des Strahls. Es wurde vermutet, daß der Zeitpunkt, an dem die reflektierte Strahlungsintensität abnimmt,den im oberflächennahen Bereich beginnenden Schmelzprozeß andeuten könnte. Hinweise auf eine Überwachung der Einschweißtiefe im Werkstück zur verbesserten Prozeßkontrolle des Laserschweißens,insbesondere im industriellen Bereich ergeben sich aus diesen Untersuchungen nicht.

Für die Prozeßkontrolle des Laserschweißens werden in der Praxis üblicherweise die Licht- und Schallemissionen des Schweißprozesses herangezogen. Um die Signale aufzufangen, müssen in der Nähe des Schweißortes Detektoren wie z.B. Mikrofone, Fotodioden etc. installiert werden, die den Platzbedarf des Schweißkopfes erhöhen und die Zugänglichkeit zum Werkstück einschränken. Mit diesen Methoden ist die Erkennung der Einschweißtiefe nicht möglich.

Für gewöhnlich wird beim herkömmlichen Verschweißen z.B. von Blechbauteilen so tief geschweißt, bis die Schweißnaht auf der vom Schweißkopf entfernt gelegenen Oberfläche des Werkstücks sichtbar ist. Ansonsten müssen zur Feststellung der Einschweißtiefe das Werkstück zerstörende Prüfverfahren eingesetzt werden.

Bekannt ist auch eine Vorrichtung zum Überwachen des Laserschweißprozesses an Werkstücken hinsichtlich der Schmelzbadtemperatur, der Dampfstrahlungsintensität und der Plasmastrahlungsintensität, die getrennt, aber gleichzeitig überwacht werden sollen (WO-A-93 03881). Zu diesem Zweck weist die bekannte Vorrichtung eine dem Laser im Strahlengang nachgeordnete Laseroptik auf, die den Laserstrahl auf das Werkstück fokussiert und die eine flache Linse mit einer reflektierenden Beschichtung zum Auskoppeln der reflektierten Laserstrahlung aufweist. Der Linse sind in Richtung der ausgekoppelten, reflektierten Strahlung Sensoren zur Messung des UV- und des IR-Anteils der reflektierten Laserstrahlung nachgeschaltet. Diese bekannte Vorrichtung dient nicht zur Überwachung der Einschweißtiefe im Werkstück beim Laserschweißen.

Der Erfindung liegt die Aufgabe zugrunde, ein Verfahren der eingangs erwähnten Art zur Verfügung zu stellen,mit dem unabhängig von der Zugänglichkeit der dem Laserstrahl abgewandten Seite des Werkstücks ohne ein zerstörendes Prüfverfahren auf sehr einfache und raumsparende Weise die Überwachung der Einschweißtiefe im Werkstück beim Laserschweißen möglich ist.

Diese Aufgabe wird erfindungsgemäß dadurch gelöst, daß man zur Überwachung der Einschweißtiefe die von einer Meßfläche des Werkstücks, in der sich der Fokus des von der Laseroptik fokussierten Laserarbeitsstrahls befindet, reflektierte Laserstrahlung ebenfalls die Laseroptik passieren läßt sowie integriert, zeitaufgelöst stetig mißt, und daß die Einschweißtiefe über den erfaßten, sich bei der beginnenden Ausbildung eines Dampfkanals im Werkstück gleichzeitig mit der sich erhöhenden Laserstrahlabsorption entsprechend verringernden Anteil der vom Werkstück reflektierten Laserstrahlung ermittelt wird.

Vorzugsweise wird die von der Meßkreisfläche des Werkstücks in die Laseroptik reflektierte Laserstrahlung mittels eines teildurchlässigen, den Laserarbeitsstrahl umlenkenden Umlenkspiegels aus der Laseroptik ausgekoppelt und fasergeleitet und gefiltert der Messung zugeführt.

Als Meßeinrichtung für die ausgekoppelte, reflektierte Laserstrahlung eignet sich eine Photodiode, wobei zwischen letzterer und dem teildurchlässigen Umlenkspiegel der Laseroptik in Strahlungsrichtung der ausgekoppelten` reflektierten Laserstrahlung in Reihe ein Linsenelement, ein Faserleiter und ein 1064 nm Filter hintereinander nachgeordnet werden können.

Das erfindungsgemäße Verfahren nutzt in überraschend einfacher Weise den Effekt der sprunghaft erhöhten Laserstrahlabsorption im Werkstück bei beginnender Ausbildung des Dampfkanals im Schmelzbad aus.Der Dampfkanal bildet sich bei Erreichen eines werkstoffabhängigen Schwellwertes der Laserleistungsdichte auf der Werkstückoberfläche aus und garantiert ausgezeichnet eine zwar werkstoff-und laserstrahlparameterabhängige, jedoch reproduzierbare Mindesteinschweißtiefe.

Da die Absorption des Laserstrahls im Werkstück bei der Bildung des Dampfkanals stark ansteigt, sinkt gleichzeitig der Anteil der vom Werkstück reflektierten Laserstrahlung. Über die Messung der reflektierten Laserstrahlung ist es somit auf einfache Weise möglich, eine zuverlässige Aussage über die erzielte Einschweißtiefe zu machen, ohne ein das Werkstück zerstörendes Prüfverfahren durchführen zu müssen. Außerdem muß die dem Laserstrahl abgewandte Seite des Werkstücks nicht zugänglich sein.

Da die vom Werkstück reflektierte` zu messende Laserstrahlung ebenso die Laseroptik wie der vom Laser kommende Arbeitsstrahl passiert,ist gewährleistet, daß eventuelle Dejustagen im Strahlengang sich gleichartig auswirken und das Meßergebnis nicht verfälschen.

In Nähe der Schweißung müssen keine zusätzlichen Detektoren installiert werden, so daß eine Erhöhung des Bauraums für den Schweißkopf nicht erforderlich ist. Die Detektoren können vielmehr an geschützter Stelle im Strahlengang oder sogar in der Strahlquelle untergebracht werden und unterliegen somit nicht der in Nähe der Schweißung gegebenen Verschmutzung.Das erfindungsgemäße Verfahren ist folglich mit wenigen, einfachen und dementsprechend kostengünstigen Komponenten umsetzbar.

Die Erfindung wird nun anhand der Zeichnungen erläutert. In diesen sind:
- Fig. 1: ein Schaubild, das die Rückreflexion der Laserstrahlung von der Oberfläche eines Werkstücks zeigt,
- Fig. 2: ein Schaubild, das einen in der Schmelze gebildeten Dampfkanal zeigt,
- Fig. 3: ein schematischer Aufbau einer Ausführungsform der Vorrichtung zur Überwachung der Einschweißtiefe beim Laserstrahlschweißen,
- Fig. 4: eine Draufsicht auf eine Meßkreisfläche des Werkstücks,
- Fig. 5: eine Schnittansicht eines Dreiblechstoßes mit Sichtseite und
- Fig. 6: ein Diagramm bezogen auf ein Fallbeispiel, das zur Kontrolle definierter Schweißtiefengrenzen dient.

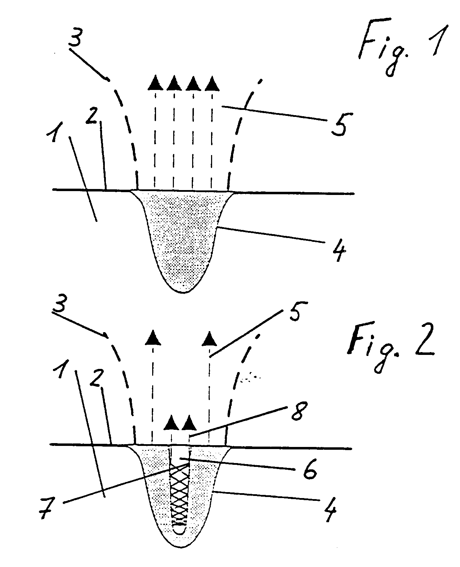

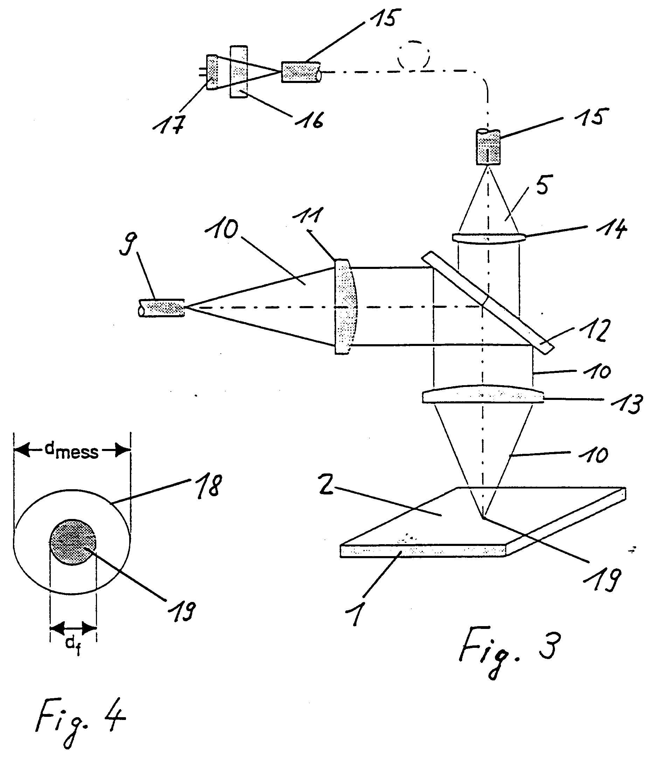

Aus den Fig. 1 und 2 geht das Kontrollprinzip des Verfahrens zur Überwachung der Einschweißtiefe beim Laserstrahlschweißen hervor, bei dem die von der Oberfläche 2 eines Werkstücks 1 im Bereich einer durch Nd:YAG-Laserstrahlung 3 bewirkten Schmelze 4 des Werkstücks 1 rückreflektierte Laserstrahlung 5 gemessen wird. Wie Fig. 2 verdeutlicht, bildet sich beim Schweißen in der Schmelze 4 bei Erreichen eines werkstoffabhängigen Schwellwertes der Laserleistungsdichte auf dem Werkstück ein Dampfkakanal oder eine Dampfkapillare 6 , auf dessen bzw. deren Wänden 7 die Laserstrahlen 3 vielfach auftreffen, wobei eine sprunghaft erhöhte Laserstrahlabsorption in der Dampfkapillaren und damit eine entsprechend geringere Rückflexion der Laserstrahlung stattfinden. Der bei der Bildung des Dampfkanals 6 von dessen Wänden 7 reflektierte Anteil 8 der Laserstrahlung wird von einer Meßeinrichtung 17,z.B. einer Fotodiode (Fig. 3) als Detektorspannung in Volt erfaßt und garantiert eine werkstoff- und laserstrahlparameterabhängige, reproduzierbare Mindesteinschweißtiefe.

Fig. 3 zeigt den schematischen Aufbau einer bevorzugten Ausführungsform der Vorrichtung zur Überwachung der Einschweißtiefe in einem Werkstück 1 beim Schweißen mittels von einem Laser 9 erzeugten und von einer Laseroptik 11, 12, 13 auf das Werkstück 1 fokussierten YAG-Leistungsstrahls 10. Die Laseroptik weist zwei Linsenelemente 11 und 13 und einen zwischen diesen im Strahlengang angeordneten, teildurchlässigen Umlenkspiegel auf , der zugleich die vom Werkstück 1 reflektierte Laserstrahlung 8 auskoppelt. Letztere wird über ein dem teildurchlässigen Spiegel 12 nachgeordnete optische Reihenschaltung eines weiteren Linsenelementes 14, einer lichtleitenden Faser 15 und eines 1064 nm Filters 16 einer Meßeinrichtung in Form einer Fotodiode 17 zugeführt.

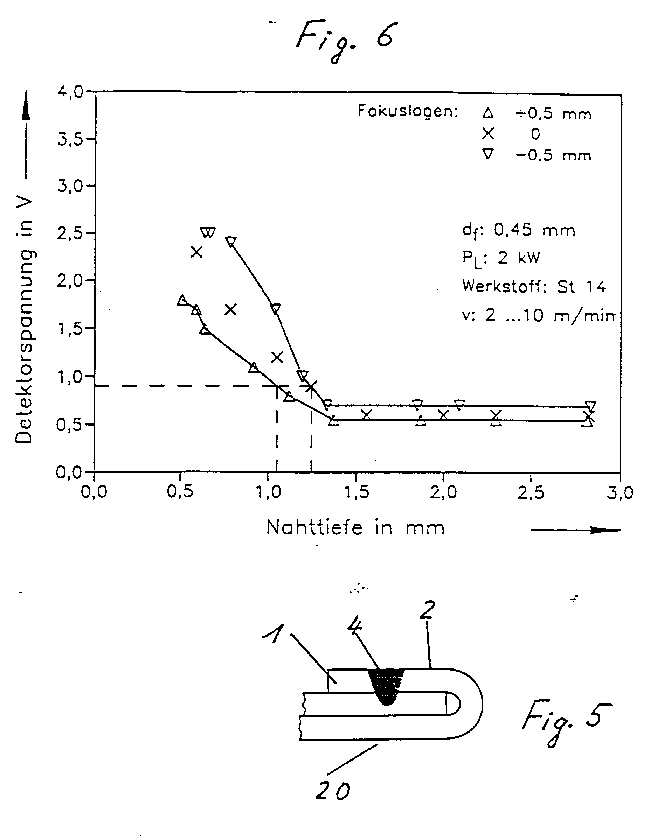

Wie Fig. 4 verdeutlicht, wird die von einer Meßkreisfläche 18 auf dem Werkstück 1, deren Durchmesser dₘₑₛₛetwa dem Laserfokus 19 entspricht, reflektierte Nd:YAG - Laserstrahlung 8 von der Fotodiode 17 erfaßt und integral, zeitaufgelöst gemessen.

In dem Diagramm gemäß Fig. 6 ist die Detektorspannung in V in Bezug auf die Nahttiefe in mm als Fallbeispiel für Fokuslagen + 0,5 mm, 0 und -0,5 mm bei einem Fokusdurchmesser d_{f} = 0,45 mm sowie den Laserparametern P = 2 kW und v= 2 .. 10 m/min beim Schweißen eines Werkstücks aus Stahl Sₜ 14 aufgetragen.
Über das Diagramm gemäß Fig. 6 ist im gegebenen Beispiel die Kontrolle definierter Schweißtiefengrenzen bzw. die Kontrolle der Signalober- und -untergrenzen der die ausgekoppelte, reflektierte Strahlung erfassenden Meßeinrichtung gegeben.

Fig. 5 zeigt im Schnitt einen Dreiblechstoß mit Sichtseite, von der aus die Schweißnaht nicht erkennbar ist, und verdeutlicht die vorteilhafte Einsatzmöglichkeit des Verfahrens unabhängig davon, ob eine optische Erfassung der Schweißnaht von der Sichtseite 2 her gegeben ist.

### Liste der Bezugszeichen

- 1: Werkstück
- 2: Oberfläche des Werkstücks
- 3: Nd:YAG-Laserstrahlung
- 4: Schmelze
- 5: reflektierte Laserstrahlung
- 6: Dampfkanal
- 7: Wände des Dampfkanals
- 8: Anteil der reflektierten Laserstrahlung
- 9: Laser
- 10: YAG-Leistungsstrahl
- 11: Linsenelement
- 12: teildurchlässiger Spiegel
- 13: Linsenelement
- 14: Linsenelement
- 15: Faser
- 16: Filter
- 17: Fotodiode
- 18: Meßkreisfläche
- 19: Laserstrahlfokus
- 20: Sichtseite

## Patentansprüche

1. Verfahren zum Überwachen des Laserschweißprozesses an Werkstücken, bei dem während des Schweißvorgangs die von einem Werkstück reflektierte Laserstrahlung und deren Anteil erfaßt werden, der bei beginnender Ausbildung einer Aufschmelzung gleichzeitig mit der sich erhöhenden Laserstrahlabsorption entsprechend sinkt,
dadurch gekennzeichnet,
daß man zur Überwachung der Einschweißtiefe die von einer Meßkreisfläche des Werkstücks, in der sich der Fokus des von einer Laseroptik fokussierten Arbeitsstrahls befindet, reflektierte Laserstrahlung ebenfalls die Laseroptik passieren läßt sowie integriert, zeitaufgelöst stetig mißt, und daß die Einschweißtiefe über den erfaßten, sich bei der beginnenden Ausbildung eines Dampfkanals im Werkstück gleichzeitig mit der sich erhöhenden Laserstrahlabsorption entsprechend verringernden Anteil der vom Werkstück reflektierten Laserstrahlung ermittelt wird.

2. Verfahren nach Anspruch 1, dadurch gekennzeichent, daß die von der Meßkreisfläche des Werkstück in die Laseroptik reflektierte Laserstrahlung mittels eines teildurchlässigen, den Laserarbeitsstrahl umlenkenden Umlenkspiegels aus der Laseroptik ausgekoppelt und fasergeleitet und gefiltert der Messung zugeführt wird.

## Claims

1. Method for monitoring the welding depth in workpieces during laser beam welding at which during the welding process the laser radiation which is reflected by a workpiece and that part are detected which at the beginning formation of a fusion accordingly decreases simultaneously with the increasing laser beam absorption,
characterized thereby,
that for the supervision of the welding depth one lets the laser radiation which is reflected from a circular measuring surface of the workpiece in which there is the focus of a work-beam focussed by laser optics also pass the laser optics and measures it integrated, time-resoluted constantly, and that the welding depth is determined via the detected part of the laser radiation reflected by the workpiece which accordingly reduces at the beginning formation of a steam channel in the workpiece simultaneously with the increasing laser beam absorption.

2. Method according to claim 1, characterized thereby that the laser radiation which is reflected from the circular measuring surface of the workpiece into the laser optics, is decoupled by means of a partly permeable deviation mirror which deviates the laser work-beam from the laser optics and is led fiber-guided and filtered to the measurement.

## Revendications

1. Procédé de surveillance du processus de soudage par laser de pièces, lors duquel sont saisis pendant l'opération de soudage le rayonnement laser réfléchi par une pièce ainsi que sa part qui lors de la formation de la surfusion est réduite simultanément conformément à l'augmentation de l'absorption du rayon laser, caractérisé par le fait
qu'en vue de la surveillance de la profondeur de soudage on laisse passer par l'optique laser et intègre également le rayonnement laser réfléchi par une surface circulaire de mesure de la pièce dans laquelle se trouve le point focal du rayon de travail focalisé par une optique laser, le mesure constamment à temps résolu et que la profondeur de soudage est déterminée moyennant la part saisie du rayonnement laser réfléchi de la pièce se réduisant simultanément avec la formation d'un canal vapeur dans la pièce et conformément à l'augmentation de l'absorption du rayon laser.

2. Procède suivant revendication 1, caractérisé par le fait que moyennant un miroir de déviation à perméabilité partielle déviant le rayon de travail laser le rayonnement laser réfléchi par la surface circulaire de mesure de la pièce dans l'optique laser est extrait de l'optique laser et, conduit par fibre et filtré, est amené à la mesure.
